Europäisches Patentamt

European Patent Office

Office européen des brevets

(19)

(11) Veröffentlichungsnummer: **0 239 003 B1**

(12) # EUROPÄISCHE PATENTSCHRIFT

(45) Veröffentlichungstag der Patentschrift: **10.06.92**

(51) Int. Cl.5: **C09C  1/50**

(21) Anmeldenummer: **87103996.2**

(22) Anmeldetag: **18.03.87**

(54) **Reaktor und Verfahren zur Herstellung von Furnaceruss.**

(30) Priorität: **22.03.86 DE 3609847**

(43) Veröffentlichungstag der Anmeldung:
**30.09.87 Patentblatt  87/40**

(45) Bekanntmachung des Hinweises auf die
Patenterteilung:
**10.06.92 Patentblatt  92/24**

(84) Benannte Vertragsstaaten:
**DE ES FR GB IT NL**

(56) Entgegenhaltungen:
**FR-A- 2 473 909**
**GB-A- 1 186 914**

(73) Patentinhaber: **Kommanditgesellschaft Deutsche Gasrusswerke GmbH u. Co.**
**Weidenstrasse 70/71**
**W-4600 Dortmund(DE)**

Patentinhaber: **Degussa Aktiengesellschaft**
**Weissfrauenstrasse 9**
**W-6000 Frankturt am Main 1(DE)**

(72) Erfinder: **Schäfer, Gerhard, Dr.**
**Am Hang 28**
**W-4600 Dortmund 30(DE)**
Erfinder: **Kopietz, Peter**
**Julius-Leber-Strasse 14**
**W-5758 Fröndenberg(DE)**

Rank Xerox (UK) Business Services

**Beschreibung**

Nach dem Furnaceruß- oder Ofenrußverfahren wird der größte Teil der Weltproduktion an Rußen, insbesondere die für die Füllung von hochbeanspruchten Kautschukartikeln erforderlichen Furnaceruße hergestellt. Im Prinzip wird dabei durch Verbrennen von gasförmigen oder flüssigen Brennstoffen, heute meist Erdgas, in feuerfest ausgemauerten rohrförmigen, in der Regel horizontal angeordneten Strömungsreaktoren bei tangentialer Lufteinleitung eine heiße rotierende Masse von Verbrennungsgasen gebildet, in die dann, meist axial, mittels eines in den Reaktor hineinragenden Ölinjektors mit Ein- oder Zweistoffzerstäuberdüse ein flüssiger Kohlenwasserstoff hocharomatischer Zusammensetzung, z. B. ein carbochemisches bzw. petrochemisches Öl, eingedüst wird.

Bei den hohen Temperaturen von ca. 1400 - 1800° C wird der eingebrachte Kohlenwasserstoff im wesentlichen in Kohlenstoff (Ruß) und Wasserstoff gespalten. Einige bekannte Verfahren erzeugen die Verbrennungsabgase in einer separaten, dem eigentlichen Rußbildungteil vorgelagerten Vorverbrennungskammer. Dabei bläst man mittels eines Drehkolben- oder Turbogebläses Verbrennungsluft, welche meist in Wärmeaustauschern mit dem den Reaktor verlassenden Reaktionsgemisch auf 300 - 600° C oder auch höher vorgeheizt ist, in die Brennkammer tangential durch ein- oder mehrere, im letzteren Falle symmetrisch angeordnete, am Brennkammerumfang angebrachte Kanalöffnungen so ein, daß eine Drallströmung entsteht.

In diese absichtlich herbeigeführte Drallströmung wird ein Brennstoff, wie Brenngas, z. B. aus einer Brenner/Injektorkombination, wie sie in der DE-PS 24 10 565 beschrieben ist, eingegeben, so daß eine Masse von heißen rotierenden Gasen entsteht, die sich, abgestützt durch die Innenwandungen des Reaktionsrohrs, schraubenförmig zur Reaktionszone vorwärts bewegt, wo sie, nunmehr weitgehend ausgebrannt, mit dem in feinste Teilchen versprühten Rußrohstoff beladen wird.

Eine wichtige Bedingung für die Erzeugung von Furnacerußen wird darin gesehen, daß die Einmischung des Rußrohstoffes in die heißen Verbrennungsgase rasch erfolgt. Ein wirksames Mittel, um eine schnelle und intensive Vermischung herbeizuführen, kann darin bestehen, daß man die rotierende heiße Gasmasse nach, während oder kurz vor Einsprühung des Rußrohstoffs eine Engstelle im Reaktor passieren läßt. Diese besteht in einer Einschnürung der inneren Reaktorkontur durch geeignete Einbauelemente, wie z. B. einen sog. Restriktorring oder andere Einbauelemente, welche z. B. konische, lavalförmige, venturiförmige oder anders geformte Konturen aufweisen können.

Die Drallströmung aus heißen Verbrennungsgasen kann auch auf andere Weise verwirklicht werden. Eine Möglichkeit dazu besteht darin, die Brennstoffzugabe von der Peripherie einer vorgelagerten Brennkammer her, z. B. durch Eingabe in tangential zugeführte Verbrennungsluft, vorzunehmen.

Eine andere, in der DE-AS 15 92 852 beschriebene Möglichkeit sieht vor, entweder den Brennstoff in Axialrichtung in ein Ende einer längsgedehnten, seitlich und tangential am stromaufwärtigen Ende eines Venturireaktors angebrachten zylindrischen Brennkammer zu injizieren, die Luft tangential in dasselbe Ende der Brennkammer einzuführen und die entstehenden heißen Verbrennungsgase dann tangential in das stromaufwärts gelegene, als zylindrischer Abschnitt ausgebildete Ende der Reaktorkammer einzuführen.

Eine weitere Möglichkeit für die Einbringung von Verbrennungsluft und Brennstoff kommt ohne separate Brennkammer aus und mischt Verbrennungsluft und Brennstoff in einem oder mehreren Kanälen, welche in einer im wesentlichen tangentialen Anstellung nahe der Stirnseite des Reaktors in runden oder schlitzförmigen Zufuhrkanälen in den Reaktor einmünden. Zur Herstellung des Luft/Brenngas-Gemisches sind in den Kanälen Gaslanzen verschiebbar angeordnet. Wenn anstelle von Brenngas ein flüssiger Brennstoff verwendet werden soll, sind die Gaslanzen durch geeignete Ein- oder Zweistoffzerstäuber ersetzt.

Verbrennungsluft und Brennstoff können aber auch durch am Umfang des vorderen Teils des Rußofens tangential angebrachte separate Kanäle eingegeben werden, wobei sie erst innerhalb der im Ofen ausgebildeten Drallströmung vermischt und verbrannt werden.

Bei all diesen Ofenkonstruktionen entsteht bereits im vorderen Teil des Reaktors eine schraubenförmig rotierende Masse aus heißen Verbrennungsprodukten, in welche der Rußrohstoff nach einer bestimmten Strecke, gegebenenfalls vor, in, oder kurz nach einer Engstelle eingesprüht werden kann. Die Vormischung von Brennstoff und Verbrennungsluft vor ihrem Eintritt in den Reaktor ermöglicht es, letzteren kompakter auszubilden. Alle vorstehend besprochenen Konstruktionen für Furnacerußreaktoren bezwecken also die Ausbildung eines starken Dralls des gasförmigen Heizmediums für die Crackreaktion, wobei der Drall bei Verwendung einer Einschnürung zwar beeinflußt, aber nicht aufgehoben wird. Die Wirkung des Dralls wird darin gesehen, daß die in die heißen Verbrennungsgase bei der Verdüsung des Rußrohstoffs eingeschössenen kleinen Flüssigkeitströpfchen durch spontane Richtungsänderung zu noch kleineren Teilchen geschert werden. Für die dabei wirksam werdenden Scherkräfte wurde direkte Proportionalität mit der Drallintensität angenommen.

Nun bedingt die Erzeugung rotierender Gasmassen einen durchaus erheblichen mechanischen Energieaufwand. Da eine rotierende Heißgaswalze unter praktischen Verhältnissen nicht ganz symmetrisch rotiert, sondern etwas "eiert" und auch eine absolute Rotationssymmetrie des eingespritzten Öls in Relation zum Auge des Wirbels nicht erzielt werden kann, geraten Öltröpfchen an die Reaktorwandung, d. h. bei ausgemauerten Reaktoren an die Auskleidung, verkoken dort, lösen Teile der Ausmauerung ab und bewirken daneben auch eine Veränderung des Rußöl/Heißgasverhältnisses. Dadurch kann die Jodzahl ansteigen; es können die eingestellten Qualitätsparameter für den gewünschten Ruß verändert werden, da ja Öl der Rußbildung entzogen wird. Abgelagerter Koks wächst aus vorgenannten Gründen unsymmetrisch an Teilen des Ofeninneren auf, beschädigt im Laufe der Zeit durch chemische und mechanische Effekte eine vorhandene Ausmauerung und verunreinigt durch abgelöste Partikel das Produkt. Es bestand daher ein starkes Bedürfnis, ein Verfahren zu finden, mit dem sich die gesamte Spezifikationspalette zumindest der Aktivruße herstellen läßt und bei dem die genannten Störungen kaum oder nicht mehr auftreten.

Es konnte nun eine Ofenkonstruktion und ein darin durchführbares Verfahren entwickelt werden, welches im Hinblick auf die im Reaktor herrschenden Strömungsverhältnisse neue Wege geht und die geschilderten Probleme weitestgehend löst.

Gemäß der Erfindung besteht ein Reaktor zur Herstellung von Furnaceruß durch thermische Zersetzung von flüssigen Kohlenwasserstoffen in heißen Verbrennungsgasen aus einem am vorderen Ende durch eine Stirnwand verschlossenen, am hinteren Ende offenen und mit einem Wärmeaustausch-,Rußabscheidungs- und Sammelteil verbindbaren, feuerfest ausgekleideten Rohr kreisförmigen Querschnitts, welches einen ersten Abschnitt aufweist, der von der Stirnwand bis zu einem den Querschnitt des Rohrs symmetrisch verengenden Element als zweiten Abschnitt reicht, an den sich ein zylindrischer oder konisch sich öffnender dritter Abschnitt anschließt, der am verengenden Element einen Durchmesser von mindestens demjenigen dieses Elements aufweist und am rückwärtigen Ende mit mindestens einer Sprühdüse für ein flüssiges Abschreckmittel versehen ist, wobei der erste Abschnitt in dem ausgekleideten Rohr in Verbindung mit einer Mittel zur Zuführung und Umsetzung eines Brennstoffs mit einem sauerstoffhaltigen Gas aufweisenden Brennkammer steht und eine verschiebliche lanzenförmige Versprüheinrichtung für den Rußrohstoff in der Rohrachse gasdicht durch die Stirnwand geführt ist und ist dadurch gekennzeichnet, daß die Brennkammer mit ihrem offenen Ende mit der Öffnung in dem ersten Abschnitt des Reaktorrohrs so verbunden ist, daß ihre Achse und diejenige des Reaktorrohrs im wesentlichen in derselben Ebene liegen und beide Achsen vorzugsweise aufeinander senkrecht stehen. Die Rußrohstoff-Versprüheinrichtung ist von der Stirnwand bis knapp über die Verengung hinaus in den zweiten Rohrabschnitt verschiebbar.

Bevorzugt hat dabei die Brennkammer dieselbe Querschnittsfläche wie das Reaktorrohr und ist in einer seinem Umfang angepaßten Ausnehmung in letzterem aufgenommen und verschweißt.

Die Brennkammer kann aber auch über ein angeflanschtes, rohrförmiges Zwischenglied, welches seinerseits in einer Öffnung des Reaktorrohrs aufgenommen und verschweißt ist, mit dem Reaktorrohr verbunden sein.

Der neue Reaktor gehört also grundsätzlich zu jenem Typus von Furnaceöfen, bei welchen Verbrennungsluft und Brenngas vorgemischt und verbrannt in den Reaktor gelangen, welche im vorderen Teil eine Einschnürung bzw. Verengung in der Innenkontur aufweisen und welche einen Rußrohstoffzerstäuber des Einstoff- oder Mehrstoffprinzips in Form einer von der Stirnwand aus, bis, in oder kurz nach der Einschnürung vorschiebbaren Lanze aufweisen. Die erfindungsgemäße Konstruktion unterscheidet sich aber von diesen bisher gebräuchlichen Reaktoren darin, daß das Verbrennungsluft/Brenngas-Gemisch an einer im vorderen Mantelabschnitt seitlich angesetzten Brennkammer gebildet und umgesetzt wird, deren Mittelachse im wesentlichen, insbesondere aber genau in der Ebene der Mittelachse des Reaktorrohrs angeordnet ist.

Damit wird die Voraussetzung für den wesentlichen Gedanken der Erfindung, den Rußrohstoff mit einem drallfreien, aber turbulenten heißen Verbrennungsgas in Berührung zu bringen, erreicht.

Die einander schneidenden Achsen von Reaktorrohr und Brennkammerzylinder müssen nicht genau aufeinander senkrecht stehen, obwohl diese Anordnung bevorzugt ist. So können Brennkammerachse und Reaktorrohrachse einen etwas kleineren oder größeren Winkel als 90° miteinander bilden, wobei letztgenannte Ausführungsform günstiger als erstere befunden wurde.

Überraschenderweise ermöglicht der erfindungsgemäße Reaktor nicht nur einen wesentlich störungsfreieren Betrieb bei den gewünschten Einstellungen, sondern erlaubt auch die Erzielung von Rußen mit hohen DBP-Werten.

Daneben läßt sich mit ihm eine erheblich gesteigerte Produktionskapazität infolge erhöhten Luft- und Öldurchsatzes erzielen. Schließlich erlaubt der Ofen die Verwendung von stark vorgeheizter Luft sowie von Sauerstoff oder Luft/Sauerstoff-Gemischen. Der Ofen kann also bei Bedingungen betrieben werden, bei denen in üblichen Öfen die Ausmauerung schmelzen würde. Der Ofen baut in seiner Längsausdehnung wegen des Fortfalls einer vorgesetzten Brennkammer sehr kompakt. Darüber hinaus kann der besonders heiße erste Ofenabschnitt mit kleinerem Durchmesser ausgebildet werden als bei herkömmlichen mit Drall arbeitenden Öfen, wodurch die Masse an erforderlichem hochtemperaturbeständigen Ausmauerungsmaterial auf kostengünstige Weise vermindert wird.

Während bei den bekannten, mit Drall der Verbrennungsgase arbeitenden Reaktoren häufig eine Zone stärkerer Turbulenz erst mit Beginn der Öleinbringung oder beim Passieren einer Engstelle entsteht, wird beim erfindungsgemäßen Reaktor dem Rußrohstoffsprühkegel ein drallfreies, aber, bedingt durch die das ausgebrannte, gegenüber dem anfänglichen Volumen der Reaktanden stark expandierte heiße Verbrennungsgas abrupt umlenkende Ofengeometrie im Bereich von Brennkammer und nachfolgendem erstem Ofenabschnitt, in besonderer Art hochturbulentes Verbrennungsgasgemisch angeboten.

Diese Voraussetzungen sind auch bei einigen bekannten Ofenkonstruktionen, bei denen im Reaktorrohr drallfreie, axiale Strömung von Verbrennungsluft und Brenngas bzw. von bereits gebildetem Verbrennungsgas (US-Patentschrift 2 851 337 bzw. US-Patentschrift 2 971 822 und DE-PS 15 92 979) herrscht oder bei denen die mit beträchtlicher Volumenzunahme verbundene Bildung des Verbrennungsgases erst kurz vor einer Engstelle mit benachbarter Rußrohstoffzufuhr in mit oder ohne Drall anströmender, auf übliche Temperaturen vorgeheizter und daher mit praktisch gleichbleibendem Volumen bewegter Verbrennungsluft erfolgt, nicht gegeben.

Aus der US-PS 4 320 090 ist ein Rußreaktor bekannt, bei dem die Verbrennungsgase in eine der Rußbildungszone vorgelagerte Kammer tangential eingeführt werden und dann mittels einer am stromabwärtigen Kammerende angebrachten, eine axiale Öffnung freilassenden und in ihrer Fläche mit mehreren zusätzlichen Öffnungen versehenen, als Flammenhalter bezeichneten Lochscheibe in mehrere Ströme aufgeteilt wird. Die Lochscheibe fungiert als gasdurchlässige Trennwand zwischen genannter Kammer und einem stromabwärts gelegenen zylindrischen Abschnitt des Rußofens. Die lanzenförmige Versprüheinrichtung für den Rußrohstoff verläuft axial durch genannte Kammer und endigt im Raum um die Ebene der gasdurchlässigen Trennwand, so daß genannte Kammer als eine dem eigentlichen Reaktor vorgelagerte Brenn- bzw. Ausbrennkammer mit tangentialer Zufuhr für die Brennmischung bezeichnet werden kann. Da die mit Durchlässen versehene Trennwand als Flammenhalter definiert ist, welcher das Brenngemisch stabilisiert, muß angenommen werden, daß auch der stromab der Trennwand gelegene Raum teilweise noch als Brennkammer fungiert.

Somit ist bei dem Reaktor gemäß der US-PS 4 320 090 die gemäß der Erfindung getroffene Aufteilung in einen ersten Ofenabschnitt, der mit einer Brennkammer so verbunden ist, daß die Achsen beider im wesentlichen in derselben Ebene liegen und vorzugsweise aufeinander senkrecht stehen, einem verengenden Element als zweiten Abschnitt und einem dritten Ofenabschnitt, nicht gegeben.

Nach einer bevorzugten, sehr günstigen Ausführungsform der Erfindung ist durch die Stirnwand einer aus einem einseitig geschlossenen Zylinder bestehenden Brennkammer eine Gaslanze für Brenngas bzw. eine lanzenförmige Versprüheinrichtung für Brennöl, vorzugsweise längsverschieblich, eingeführt und mündet in dem von der Mündung der Brennstoffzufuhr bestreichbaren Bereich im Mantel des Brennkammerzylinders mindestens ein im wesentlichen senkrecht zur Zylinderachse gerichteter Kanal für die Verbrennungsluft. Die Achse dieses Kanals liegt im wesentlichen in derselben Ebene wie die Achse des Brennkammerzylinders.

Die senkrecht aufeinander stoßenden Mengenströme von Brennstoff und Verbrennungsluft vermischen sich dabei unter hoher Turbulenz. Von dieser ersten Turbulenzzone aus strömt das heiße Verbrennungsgas in den Reaktor ein und durch Aufprall auf die gegenüberliegende Reaktorwand, den dadurch bedingten Rückstau und durch die Umlenkungseffekte in Richtung auf die Längsachse des Reaktors wird höchste Turbulenz unter Vermeidung einer Drallströmung erzeugt. Entgegen jeder Erwartung wird die der Brennkammer gegenüberliegende innere Wandfläche der Reaktorauskleidung durch die erfindungsgemäße Strömungsführung in keiner Weise nachteilig beeinflußt.

Die Dimensionierung der Brennkammer richtet sich im wesentlichen nach der Betriebskapazität des Ofens und damit nach den Heißgasmengen, die zur Versorgung des Ofens bei den in Frage kommenden Betriebszuständen benötigt werden. Ihre Länge wird so bemessen, daß ein möglichst vollständiger Ausbrand des Brennstoffs vor der Einmündung in das Reaktorrohr erreicht ist. Die Brennkammeröffnung zum Reaktorrohr kann im Höchstfall den Durchmesser des ersten zylindrischen Reaktorrohrabschnitts haben, ist jedoch auf diesen im Rahmen der Erfindung bevorzugten Fall nach kleineren Durchmessern hin nicht beschränkt.

Der erfindungsgemäße Reaktor ist mit einer Einschnürung in Form eines rotationssymmetrischen, an der Innenwand des Reaktors bzw. seiner Ausmauerung angesetzten Elements versehen. Für die Form dieses Einbauteils kommen im Rahmen der Erfindung drei besonders geeignete Ausführungsarten in Betracht. Demgemäß sieht eine besonders geeignete Ausführungsform des erfindungsgemäßen Reaktors vor, daß das verengende Element im Reaktorrohr durchgehend zylindrisch oder zulaufend-konisch im vorderen und zylindrisch im hinteren Teil oder zulaufend-konisch im vorderen und öffnend-konisch im hinteren Teil ausgebildet ist.

Die Neigung der Konen ist in weitem Bereich variierbar. Eine bevorzugte Neigung der Mantelkonen auf der Eintrittsseite beträgt 18° in bezug auf die Reaktorlängsachse und auf der Austrittsseite 3,2° ebenfalls in bezug auf die Reaktorlängsachse.

An der Stelle der größten Verengung weist das Element meist eine mit der Rohrachse parallele Fläche auf; die Mindestlänge dieses ebenen Abschnitts wird so gewählt, daß mechanische Stabilität und Dauerhaftigkeit gewährleistet sind. Im allgemeinen wird seine Länge nicht größer als sein lichter Durchmesser gewählt.

Die lichte Weite der Einschnürung kann das 0,30 bis 0,55-fache des Innendurchmessers der ersten Reaktorzone betragen.

Der Beginn der Einschnürung bzw. des verengenden Elements wird bevorzugt unmittelbar stromab der Brennkammermündung angeordnet, kann aber auch in einem Abstand, z. B. entsprechend dem 1 - 3-fachen Brennkammerdurchmesser, gerechnet ab Brennkammermittelachse, angeordnet werden.

Gemäß der Erfindung hat der neue Reaktor drei wichtige Zonen, nämlich

1. den mit der Brennkammer verbundenen ersten, zylindrisch ausgebildeten Abschnitt, welcher an der Stirnwand des Reaktors beginnt und am Beginn des Verengungselementes, beispielsweise dem Ansatz eines zulaufenden Konus, endigt,

2. das Verengungselement selbst, welches je nach seiner geometrischen Ausbildung unterschiedliche Länge aufweist und

3. den dritten Abschnitt, der dort ansetzt, wo die jeweils mit kreisförmigem Querschnitt ausgebildete engste Stelle des Verengungselementes endigt. Er stellt den wesentlichen Teil der Rußbildungszone dar und trägt am rückwärtigen, d. h. abströmseitigen Ende eine Einrichtung zum Abbrechen der Rußbildungsreaktion durch Abschrecken, z. B. Wassersprühdüsen, und nachfolgend Verbindungsmittel zum Anschluß an die üblichen Vorrichtungen zum Wärmeaustausch, zur Trennung des Rußes vom Prozessgas und zu deren Sammlung zur Weiterverarbeitung.

Der dritte Abschnitt kann bezüglich seiner geometrischen Form und seines Durchmessers verschieden ausgebildet sein. Er kann

a) zylindrisch sein und den gleichen Durchmesser wie der erste Abschnitt, aber auch einen größeren oder einen kleineren Durchmesser wie dieser haben,

b) die Form eines sich öffnenden Konus besitzen und gegebenenfalls auch einen daran anschließenden zylindrischen Abschnitt aufweisen,

c) aber auch noch mit weiteren Einbauten, Schikanen, Verengungen und dgl., wie bei bekannten Furnaceöfen manchmal vorgesehen, versehen sein.

Ein zylindrischer dritter Reaktorabschnitt mit dem gleichen Durchmesser wie der erste Abschnitt wird jedoch bevorzugt.

Die Rußrohstoffzerstäuberlanze ist im vorderen Reaktorabschnitt mit ihrer Mündung zwischen der Stirnwand und einer Stelle knapp nach der Einschnürung bzw. Verengung verschiebbar. Bezeichnet man in Strömungsrichtung gesehen den Beginn der engsten Stelle der Einschnürung mit Position Null, so wird die Mündung der Lanze, je nach der herzustellenden Rußsorte, von dieser Position aus, jeweils bezogen auf den Engstellendurchmesser, bis -4 nach rückwärts (Minuswert) und bis + 1,6 nach vorwärts (Pluswert) geschoben. Insbesondere sind die Stellungen zwischen - 1,5 und + 0,5 günstig, jedoch wird in vielen Fällen bei Stellungen zwischen - 0,5 und 0 gearbeitet.

Ein weiterer Gegenstand der Erfindung ist ein Verfahren zur Herstellung von Furnacerußen, insbesondere unter Einsatz des erfindungsgemäßen Reaktors. Es besteht darin, daß man in einer Brennkammer erzeugte heiße Verbrennungsgase einem längsausgedehnten Reaktor im wesentlichen in der Ebene seiner Mittelachse und im wesentlichen senkrecht zu dieser Achse zuführt und sie dann vor, in oder knapp nach einer Einschnürung in der Reaktorinnenkontur mit eingesprühtem Rußrohstoff belädt.

Die Erfindung wird nachfolgend anhand von zwei in der Zeichnung dargestellten günstigen Reaktorkonstruktionen in Verbindung mit Ausführungsbeispielen weiter erläutert.

In der Zeichnung zeigen

Figur 1    einen Längsschnitt durch einen erfindungsgemäßen Reaktor mit Brennkammer und einem auf seiner Stirnseite zulaufend-konischen, auf seiner Rückseite zylindrischen Verengungselement;

Figur 2    einen Längsschnitt durch einen abgewandelten erfindungsgemäßen Reaktor mit Brennkammer und einem auf seiner Stirnseite zulaufend-konischen, auf seiner Rückseite öffnend-konischen verengenden Element;

Figur 3    einen Querschnitt entlang der Linie A - A durch den Reaktor nach Figur 1,

Figur 4    einen Längsschnitt durch die Spitze der Gaslanze für Brenngas in der Brennkammer nach Figur 3 und

Figur 5    einen Querschnitt durch die Spitze der Gaslanze nach Figur 4 entlang der Linie B - B.

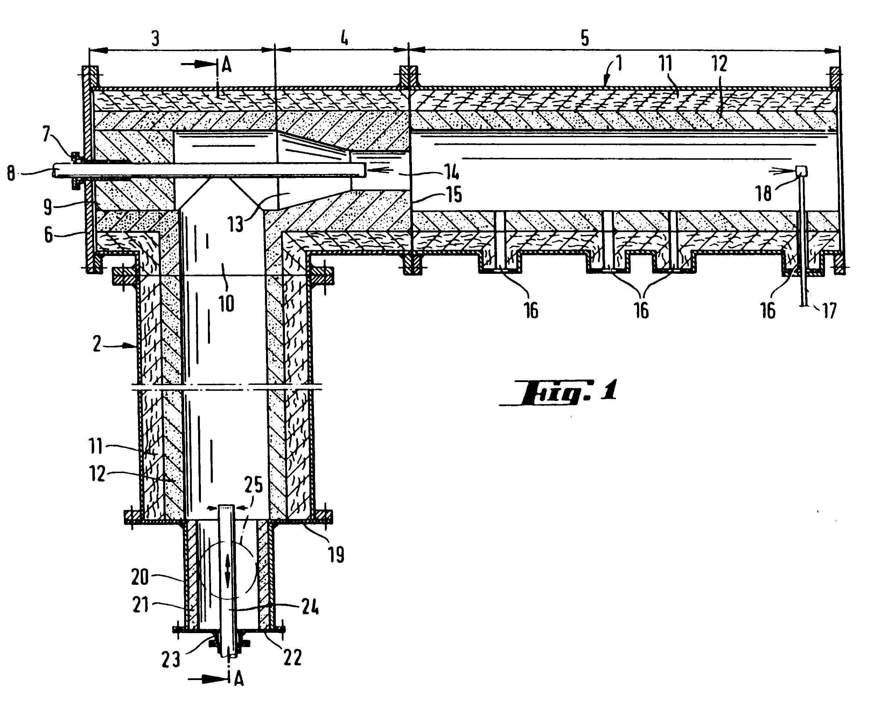

Der in Figur 1 dargestellte Rußreaktor besteht aus einem äußerlich zylindrischen, insgesamt etwa 4,85 m langen Teil (1) mit der seitlich verbundenen, etwa 2,40 m langen Brennkammer (2). Beide Rohrteile haben einen äußeren Durchmesser von knapp 1 Meter.

Der Reaktorteil (1) ist innenseitig mit einer äußeren, aus isolierender Masse bestehenden Schicht (11) ausgekleidet, an die sich nach innen eine hochfeuerfeste keramische Schicht (12) anschließt. Er besteht aus drei Zonen (3) (4) und (5).

Die erste Zone (3) trägt auf der Stirnseite eine Abschlußplatte (6), die in der Verlängerung der Reaktorachse mit einer Stopfbuchse (7) zur Aufnahme der Öllanze (8) ausgerüstet ist. Die der Stirnseite in Strömungsrichtung entgegengesetzt liegende Querschnittsfläche leitet unmittelbar in die zweite Zone (4) über. Die Stirnplatte (6) der ersten Zone (3) ist auf der Reaktorinnenseite mit einer hochtemperaturfesten Masse (9) zu weitgehender Verminderung der Wärmeabstrahlung nach außen versehen, wodurch sich eine besondere Wasserkühlung der Stirnplatte erübrigt. Die keramische Auskleidung der ersten Zone (3) enthält seitlich eine Aussparung (10) für die Einleitung der in der Brennkammer (2) erzeugten Verbrennungsgase. Die Achse der Brennkammer steht senkrecht auf der Reaktorachse und liegt mit ihr in der gleichen Ebene, d. h., daß die in der Brennkammer gebildeten Verbrennungsgase so in den Reaktor eintreten, daß kein Drall entsteht. Der Durchmesser der Aussparung entspricht dem inneren Durchmesser von Brennkammer (2) und Reaktorzone (3) und beträgt 460 mm.

Die zweite Zone (4) beinhaltet das Verengungselement, das aus einem 725 mm langen, in Strömungsrichtung zulaufendkonischen Einlauf (13), einem etwa 330 mm langen, zylindrischen Teil (14) von 203 mm Durchmesser und auslaufseitig einer Wand mit planer Abschlußfläche (15) besteht. Es ist aus hochfeuerfester Masse gefertigt und rotationssymmetrisch zur Reaktorachse an der Isolierschicht (11) befestigt.

Die dritte Zone (5) besteht aus einem, auf der Innenseite mit hochtemperaturfester Masse (12) zylindrisch ausgekleideten Rohr. Es enthält mehrere, mit gasdichten Verschlüssen versehene Einrichtungen (16) zur Aufnahme von mit Sprühdüsen (18) ausgerüsteten Kühlmittelrohren (17). In der Figur sind zwar nur 4 dieser Öffnungen (16) mit der zugehörigen Durchführung durch die keramische Masse dargestellt, es können jedoch je nach der herzustellenden Rußtype und der dadurch vorgegebenen Reaktionszeit mehrere Einrichtungen (16) dieser Art mit unterschiedlichen Abständen von der Engstelle (14) angebracht sein. Der innere Durchmesser der zylindrischen dritten Zone (5) entspricht demjenigen der ersten Zone (3). Das in Strömungsrichtung liegende Ende der dritten Zone des Reaktors ist in bekannter Art mit den nachfolgenden Apparaten zum Wärmeaustausch, zur Trennung von Ruß und Prozeßgas und mit den üblichen Weiterverarbeitungseinrichtungen verbunden.

Die 2400 mm lange Brennkammer (2) besteht aus einem äußeren Rohrmantel von gleicher Form und gleichem Durchmesser wie die erste Zone (3) des Reaktors. Sie ist wie dieser mit einer wärmedämmenden Schicht (11) und einer hochtemperaturfesten Schicht (12) ausgekleidet. In Strömungsrichtung gesehen trägt sie auf der Stirnseite eine Abschlußplatte (19). Sie steht auf der Auslaufseite in der oben beschriebenen Weise in offener Verbindung mit dem Innenraum der ersten Zone (3) des Reaktors. Erfindungsgemäß liegt die Achse der Brennkammer (2) in der gleichen Ebene wie die fluchtenden Achsen der drei Reaktorzonen.

Die Stirnplatte (19) der Brennkammer ist mit dem rohrförmigen T-Stück (20) verbunden. Dieser innen mit keramischer Masse (21) ausgekleidete Apparateteil hat eine Länge von 500 mm, einen lichten Durchmesser von etwa 320 mm und trägt auf seiner Stirnseite eine Abschlußplatte (22), die ihrerseits mit einer in der Achse der Brennkammer liegenden Stopfbuchse (23) zur Aufnahme einer längsverschieblichen Gaslanze (24) oder eines entsprechenden, düsenbestückten Rohres zur Einführung von Brennöl ausgerüstet ist. Den dritten Schenkel des T-Stückes (20) bildet ein kürzeres Rohrstück (25), das mit dem Kanal für die Verbrennungsluft verbunden ist. Die Achse dieses der Verbrennungsluftzufuhr dienenden Rohrstückes steht senkrecht zur Achse der Brennkammer und liegt mit dieser in einer gemeinsamen Ebene.

Figur 2 zeigt eine Ausführung des erfindungsgemäßen Reaktors zur Furnacerußherstellung, die sich von der Ausführung gemäß Figur 1 nur dadurch unterscheidet, daß die dritte Zone (5) des Reaktors innen eine sich öffnend-konische Form (siehe Position 26) besitzt. In bewährter Ausführung hat dieser Konus eine solche Neigung, daß auf einem dem 5,14-fachen des lichten Durchmessers der ersten Zone entsprechenden Wege der lichte Durchmesser der ersten Zone wieder erreicht wird.

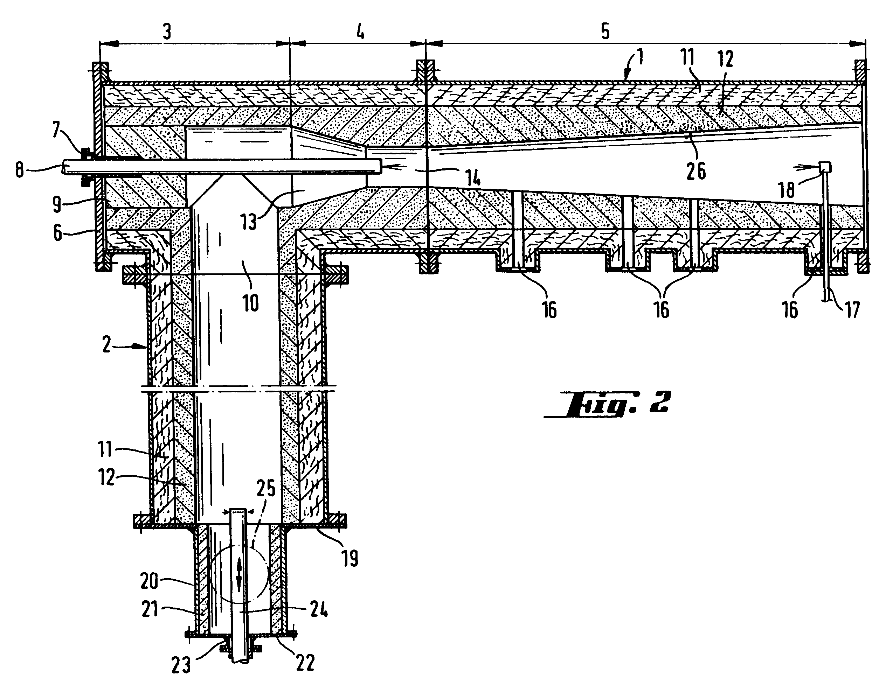

Figur 3 verdeutlicht die schon erläuterten Brennkammerteile, hauptsächlich aber die Form des oben beschriebenen T-Stückes (20) zur Zuführung der Verbrennungsluft und der Zufuhreinrichtung für ein gasförmiges Brennmittel.

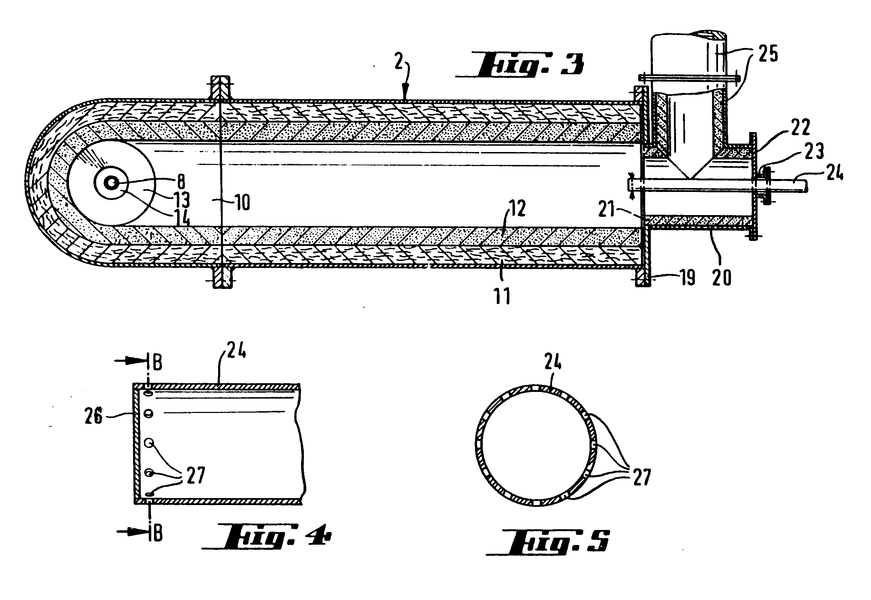

Detailangaben zu einer bewährten Ausführungsform der Spitze der Brenngaslanze (24) sind der Figur 4 und schließlich der Figur 5, die den Schnitt in der Ebene B - B von Figur 4 wiedergibt, zu entnehmen. Das der Brenngaszuführung dienende Rohr (24) hat ca. 80 mm Außendurchmesser und ist an der dem Reaktor zugewandten Seite mit einer Platte (26) verschlossen. So nahe wie möglich an dieser Platte sind im Rohr zwölf radialgerichtete Bohrungen (27) von je 9 mm Durchmesser, etwa gleichmäßig auf dem Rohrumfang verteilt, zum Gasaustritt angebracht.

In den folgenden Tabellen werden verschiedene Einstellungen für die Herstellung von Aktiv- und Halbaktiv-Rußen mit den dazu gehörigen analytischen Eigenschaften der dabei erhältlichen Rußprodukte angegeben. Dabei kommen die Reaktoren mit den vorstehend beschriebenen Abmessungen gemäß Figur 1 und 2 zur Anwendung.

Wie die Beispiele der nachfolgenden Tabelle zunächst zeigen, können mit dem erfindungsgemäßen Reaktor Furnaceruße verschiedenster Qualitäten und Typen produziert werden. Dies trifft insbesondere zu für

| Beispiel | Rußqualität | Rußtype |
|---|---|---|
| 1 | SAF | N-121 |
| 2 | ISAF | N-220 |
| 3 | ISAF | N-234 |
| 4, 5 | HAF | N-375 |
| 6, 7 | HAF | N-339 |
| 8, 9, 10, 11 | HAF | N-326 |
| 12, 13 | FEF | N-550 |
| 14 | GPF | N-660 |

Wie der Vergleich der Beispiele 6 und 7 zeigt, führt sowohl der Reaktor in der Ausführung gemäß Figur 1 wie auch der Figur 2 unter weitgehend vergleichbaren Einsatzbedingungen auch zu den entsprechend vergleichbaren Ergebnissen.

Das beschriebene günstige Verhalten des Reaktors bei Anwendung verschiedener Brennmittel wird in den Beispielen 4 und 5, in gewisser Weise aber auch in den Beispielen 10 und 11 verdeutlicht. Wie daraus ersichtlich ist, kann sowohl Brenngas wie auch Brennöl als Brennmittel eingesetzt werden, ohne daß größere Veränderungen in den Einsatzbedingungen erforderlich werden oder sich die Qualität der erzeugten Ruße, ausgedrückt in den analytischen Werten, wesentlich verändert.

Ein weiterer Vorteil des erfindungsgemäßen Reaktors wird in Beispiel 1 verdeutlicht. Es zeigt, daß unter den aufgeführten Betriebseinstellungen die Erzielung sehr hoher Rußstrukturen, ausgedrückt in DBP-Werten (nach ASTM D2414), möglich ist.

Der erfindungsgemäße Reaktor ermöglicht aber auch den Betrieb mit sauerstoffangereicherter Verbrennungsluft, die auf sehr hohe Temperaturen vorgeheizt ist. Beispiel 2 zeigt die hier angewendeten Reaktorbedingungen und die dazugehörigen Ergebnisse.

Es wird häufig betont, daß ein stöchiometrisches Verhältnis von Gesamtsauerstoff zu Brenngas bzw. Brennöl, so daß die Verbrennungsgase beim Verlassen der Brennkammer keinen Sauerstoff mehr enthalten, aus wirtschaftlichen Gründen wünschenswert ist. Wenn nämlich in dem Furnacerußprozeß erheblich mehr Verbrennungsluft eingeführt wird als zur Verbrennung des eingesetzten Brennmittels stöchiometrisch erforderlich ist, dann setzt sich der überschüssige Sauerstoff mit dem zur Spaltung eingesetzten Rußöl um und vermindert auf diese Weise die Ausbeute an Ruß. Trotzdem ist es in den meisten Fällen erforderlich, einen solchen Sauerstoffüberschuß gegenüber der stöchiometrisch erforderlichen Menge einzusetzen, um die Verbrennungsgase somit zu verdünnen, daß eine zur Schonung der Reaktorausmauerung ausreichend tiefe Temperatur erreicht wird. Überraschenderweise wurde nun gefunden, daß die neue Reaktorkonstruktion, wie Beispiel 10 verdeutlicht, einen störungsfreien Dauerbetrieb unter stöchiometrischen Bedingungen ohne nachteilige Erscheinungen am Reaktor ermöglicht.

Mit dem erfindungsgemäßen Reaktor können die verschiedensten Furnacerußtypen sowohl mit normaler, natürlicher Verbrennungsluft wie auch mit sauerstoffangereicherter Luft hergestellt werden. In letzterem Falle erreicht bei der Herstellung von Aktivruß, wie Beispiele 4 bis 9 und 11 zeigen, die Beladung der Verbrennungsgase mit Rußöl, bezogen auf den Anteil an eingesetzter Verbrennungsluft, so hohe Werte, daß in einem Reaktor üblicher Bauart das Auftreten eines erheblichen Teiles des eingesetzten Rußöles auf die heiße Reaktorwand mit der dann unvermeidlichen Bildung von Koks, die ihrerseits ebenso zwingend zu einer nicht mehr tragbaren Qualitätsbeeinträchtigung des Rußes durch Grit führt, nicht oder nicht mit ausreichender Sicherheit vermieden werden kann. Bei dem erfindungsgemäßen Reaktor tritt die genannte Wandberührung durch Rußöl bei den in den oben aufgeführten Beispielen vorgesehenen Einstellungen nicht auf, so daß die Anreicherung der Verbrennungsluft mit Sauerstoff mit ihren vielfältigen Vorteilen voll genutzt werden kann, ohne Nachteile durch Koksbildung und deren Folgen in Kauf nehmen zu müssen.

Die aus der Sauerstoffanreicherung der Verbrennungsluft resultierenden Vorteile treten insbesondere auch bei der Produktion von Halbaktivrußen auf, wie Beispiel 13 zeigt. Wie aus den Beispielen 12 und 14 zu entnehmen ist, treten bei der Herstellung von Halbaktivrußen die genannten Vorteile aber schon beim Arbeiten ohne Sauerstoffzusatz sehr deutlich zu Tage. Der Einsatz des erfindungsgemäßen Reaktors ermöglicht hier eine sehr hohe Ölbeladung, wodurch sich eine besonders wirtschaftliche Produktionsweise ergibt.

| Beispiel | | 1 | 2 | 3 | 4 | 5 |
|---|---|---|---|---|---|---|
| Rußqualität | | SAF | ISAF | ISAF | HAF | HAF |
| Rußtype | ASTM | N-121 | N-220 | N-234 | N-375 | N-375 |
| Reaktor | | Fig. 1 | Fig. 2 | Fig. 1 | Fig. 1 | Fig. 1 |
| Verbrennungsluftmenge | m3/h | 8 000 | 8 000 | 7 600 | 8 000 | 7 700 |
| Verbrennungslufttemperatur | K | 855 | 1 078 | 865 | 890 | 885 |
| Sauerstoff | m3/h | - | 230 | - | 221 | 200 |
| Rußölqualität | BMCI | 165 | 165 | 167 | 162 | 166 |
| Rußölmenge | kg/h | 1 725 | 2 525 | 1 675 | 2 900 | 2 980 |
| Rußöltemperatur | K | 423 | 420 | 425 | 423 | 420 |
| Brenngasmenge (Methan) | m3/h | 598 | 702 | 541 | - | 700 |
| Brennölmenge + | kg/h | - | - | - | 620 | - |
| Brennkammervordruck | mbar | 350 | 483 | 314 | 438 | 452 |
| Position der Rußöldüse | mm | -305 | 0 | -254 | +102 | +102 |
| Position der Wasserdüse * | mm | +813M | +1 778G | +889M | +1 778G | +1 778G |
| Ölbeladung | gÖl/m3 | 215 | 315 | 220 | 362 | 387 |
| Rußmenge | kg/h | 950 | 1 550 | 976 | 1 945 | 1 934 |

+ Eingesetzt wurde petrochemisches Öl mit BMCI = 126

* Sprührichtung:    M = Mitstrom    G = Gegenstrom

EP 0 239 003 B1

| Beispiel | | 6 | 7 | 8 | 9 | 10 |
|---|---|---|---|---|---|---|
| Rußqualität | | HAF | HAF | HAF | HAF | HAF |
| Rußtype | ASTM | N-339 | N-339 | N-326 | N-326 | N-326 |
| Reaktor | | Fig. 2 | Fig. 1 | Fig. 1 | Fig. 1 | Fig. 1 |
| Verbrennungsluftmenge | m3/h | 8 000 | 8 000 | 7 000 | 7 400 | 7 800 |
| Verbrennungslufttemperatur | K | 895 | 895 | 925 | 915 | 892 |
| Sauerstoff | m3/h | 142 | 120 | 118 | 580 | - |
| Rußölqualität | BMCI | 165 | 165 | 162 | 123 | 165 |
| Rußölmenge | kg/h | 2 905 | 2 950 | 2 503 | 3 805 | 2 520 |
| Rußöltemperatur | K | 421 | 423 | 420 | 422 | 428 |
| Brenngasmenge (Methan) | m3/h | 698 | 702 | 498 | 655 | 786 |
| Brennölmenge + | kg/h | - | - | - | - | - |
| Brennkammervordruck | mbar | 500 | 463 | 350 | 485 | 395 |
| Position der Rußöldüse | mm | +102 | +102 | -51 | 0 | +51 |
| Position der Wasserdüse * | mm | +1 778M | 1 778G | +2 438G | +3 505G | +3 505G |
| Ölbeladung | gÖl/m3 | 363 | 367 | 357 | 513 | 323 |
| Rußmenge | kg/h | 1 920 | 1 952 | 1 680 | 2 356 | 1 848 |

+ Eingesetzt wurde petrochemisches Öl mit BMCI = 126

* Sprührichtung:    M = Mitstrom    G = Gegenstrom

| Beispiel | | 11 | 12 | 13 | 14 |
|---|---|---|---|---|---|
| Rußqualität | | HAF | FEF | FEF | GPF |
| Rußtype | ASTM | N-326 | N-550 | N-550 | N-660 |
| Reaktor | | Fig. 2 | Fig. 1 | Fig. 1 | Fig. 1 |
| | | | | | |
| Verbrennungsluftmenge | m3/h | 8 000 | 7 200 | 7 200 | 6 900 |
| Verbrennungslufttemperatur | K | 886 | 920 | 925 | 935 |
| Sauerstoff | m3/h | 50 | - | 580 | - |
| Rußölqualität | BMCI | 162 | 123 | 123 | 125 |
| Rußölmenge | kg/h | 3 405 | 3 905 | 5 410 | 3 895 |
| Rußöltemperatur | K | 425 | 425 | 425 | 423 |
| Brenngasmenge (Methan) | m3/h | - | 353 | 480 | 340 |
| Brennölmenge + | kg/h | 605 | - | - | - |
| Brennkammervordruck | mbar | 448 | 92 | 326 | 84 |
| Position der Rußöldüse | mm | 0 | 0 | 0 | 0 |
| Position der Wasserdüse * | mm | +4 470G | +5 944M | +5 944M | +5 944M |
| Ölbeladung | gÖl/m3 | 426 | 542 | 751 | 565 |
| Rußmenge | kg/h | 2 403 | 2 580 | 3 580 | 2 710 |

+ Eingesetzt wurde petrochemisches Öl mit BMCI = 126

* Sprührichtung:   M = Mitstrom   G = Gegenstrom

| Beispiel | 1 | 2 | 3 | 4 | 5 |
|---|---|---|---|---|---|
| Rußqualität | SAF | ISAF | ISAF | HAF | HAF |
| Rußtype ASTM | N-121 | N-220 | N-234 | N-375 | N-375 |
| Reaktor | Fig. 1 | Fig. 2 | Fig. 1 | Fig. 1 | Fig. 1 |
| Jodadsorption ASTM D1510 mg/g | 121 | 122 | 120 | 92 | 90 |
| DBP-Zahl ASTM D2414 ml/100g | 164* | 115 | 125 | 114 | 114 |
| Farbstärke ASTM D3265 | 121 | 116 | 126 | 116 | 115 |
| CTAB-Zahl ASTM D3765 m2/g | 122 | 110 | 121 | 97 | 96 |
| 24M4-DBP-Zahl ASTM D3493 ml/100g | 135* | 97 | 101 | 96 | 96 |

* Wert absichtlich hoch gefahren

12

| Beispiel | | | 6 | 7 | 8 | 9 | 10 |
|---|---|---|---|---|---|---|---|
| Rußqualität | | | HAF | HAF | HAF | HAF | HAF |
| Rußtype | ASTM | | N-339 | N-339 | N-326 | N-326 | N-326 |
| Reaktor | | | Fig. 2 | Fig. 1 | Fig. 1 | Fig. 1 | Fig. 1 |
| Jodadsorption | ASTM D1510 | mg/g | 90 | 90 | 82 | 81 | 80 |
| DBP-Zahl | ASTM D2414 | ml/100 g | 119 | 120 | 72 | 71 | 71 |
| Farbstärke | ASTM D3265 | | 110 | 110 | 113 | 111 | 110 |
| CTAB-Zahl | ASTM D3493 | ml/100g | 94 | 95 | 84 | 83 | 82 |
| 24M4-DBP-Zahl | ASTM D3493 | ml/100g | 99 | 101 | 72 | 70 | 69 |

EP 0 239 003 B1

| Beispiel | | | 11 | 12 | 13 | 14 |
|---|---|---|---|---|---|---|
| Rußqualität | ASTM | | HAF | FEF | FEF | GPF |
| Rußtype | | | N-326 | N-550 | N-550 | N-660 |
| Reaktor | | | Fig. 2 | Fig. 1 | Fig. 1 | Fig. 1 |
| Jodadsorption | ASTM D1510 | mg/g | 82 | 45 | 44 | 36 |
| DBP-Zahl | ASTM D2414 | ml/100g | 73 | 118 | 120 | 90 |
| Farbstärke | ASTM D3265 | | 112 | - | - | - |
| CTAB-Zahl | ASTM D3493 | ml/100g | 84 | 44 | 43 | 36 |
| 24M4-DBP-Zahl | ASTM D3493 | ml/100g | 70 | 86 | 86 | 77 |

**Patentansprüche**

1. Reaktor zur Herstellung von Furnaceruß durch thermische Zersetzung von flüssigen Kohlenwasserstoffen in heißen Verbrennungsgasen, bestehend aus einem am vorderen Ende durch eine Stirnwand verschlossenen, am hinteren Ende offenen und mit einem Wärmeaustausch-, Rußabscheidungs- und Sammelteil verbindbaren, feuerfest ausgekleideten Rohr kreisförmigen Querschnitts, welches einen ersten Abschnitt aufweist, der von der Stirnwand bis zu einem den Querschnitt des Rohrs symmetrisch verengenden Element als zweiten Abschnitt reicht, an das sich ein zylindrischer oder konisch sich öffnender dritter Abschnitt anschließt, der am verengenden Element einen Durchmesser von mindestens demjenigen dieses Elements aufweist und am rückwärtigen Ende mit mindestens einer Sprühdüse für ein flüssiges Abschreckmittel versehen ist, wobei der erste Abschnitt in dem ausgekleideten Rohr in Verbindung mit einer Mittel zur Zuführung und Umsetzung eines Brennstoffs mit einem sauerstoffhaltigen Gas aufweisenden Brennkammer steht und eine verschiebliche lanzenförmige Versprüheinrichtung für den Rußrohstoff in der Rohrachse durch die Stirnwand geführt ist, **dadurch gekennzeichnet**, daß die Brennkammer (2) mit ihrem offenen Ende mit der Öffnung (10) in dem ersten Abschnitt (3) des Reaktorrohrs (1) so verbunden ist, daß ihre Achse und diejenige des Reaktorrohrs (1) im wesentlichen in derselben Ebene liegen und beide Achsen vorzugsweise aufeinander senkrecht stehen.

2. Reaktor nach Anspruch 1,
**dadurch gekennzeichnet**,
daß die Brennkammer (2) dieselbe Querschnittsfläche wie das Reaktorrohr (1) hat und in einer seinem Umfang angepaßten Ausnehmung in letzterem aufgenommen und verschweißt ist.

3. Reaktor nach Anspruch 1,
**dadurch gekennzeichnet**,
daß die Brennkammer (2) über ein angeflanschtes, rohrförmiges Zwischenglied, welches seinerseits in einer Öffnung (10) des Reaktorrohrs (1) aufgenommen und verschweißt ist, mit dem Reaktorrohr verbunden ist.

4. Reaktor nach den Ansprüchen 1 bis 3,
**dadurch gekennzeichnet**,
daß durch die Stirnwand (19) einer aus einem einseitig geschlossenen Zylinder bestehenden Brennkammer (2) eine Gaslanze (24) für Brenngas bzw. eine lanzenförmige Versprüheinrichtung für Brennöl, vorzugsweise längsverschieblich, eingeführt ist und in dem von der Mündung der Brennstoffzufuhr bestreichbaren Bereich im Mantel des Brennkammerzylinders mindestens ein im wesentlichen senkrecht zur Zylinderachse gerichteter Kanal (25) für die Verbrennungsluft mündet.

5. Reaktor nach den Ansprüchen 1 bis 4,
**dadurch gekennzeichnet**,
daß das verengende Element (13, 14) im Reaktorrohr durchgehënd zylindrisch oder zulaufend-konisch im vorderen und zylindrisch im hinteren Teil oder zulaufend-konisch im vorderen und öffnend-konisch im hinteren Teil ausgebildet ist.

6. Verfahren zur Herstellung von Furnaceruß, insbesondere unter Einsatz des Reaktors nach vorstehenden Ansprüchen,
**dadurch gekennzeichnet**,
daß man in einer Brennkammer erzeugte heiße Verbrennungsgase einem längsausgedehnten Reaktor im wesentlichen senkrecht zu dieser Achse zuführt und sie dann vor, in oder knapp nach einer Einschnürung in der Reaktorinnenkontur mit eingesprühtem Rußrohstoff belädt.

**Claims**

1. A reactor for the production of furnace black by thermal decomposition of liquid hydrocarbons in hot combustion gases, consisting of a refractorily lined tube of circular cross-section which is closed at its front end by an end wall, open at its rear end and designed for connection to a heat-exchange, carbon black deposition and collecting section and which comprises a first section extending from the end wall to an element with symmetrically tapered cross-section of the tube as the second section which is adjoined by a cylindrical or conically widening third section which, at the tapering element, has a diameter at least equal to that of this element and, at its rear end, is provided with at least one spray nozzle for a liquid quenching medium, the first section in the lined tube communicating with a combustion chamber comprising means for supplying and reacting a fuel with an oxygen-containing gas and a displaceable lance-like spray unit for the carbon black raw material being guided through the end wall on the axis of the tube, characterized in that, at its open end, the combustion chamber (2) communicates with the opening (10) in the first section (3) of the reactor tube (1) in such a way that its axis and that of the reactor tube (1) lie in substantially the same plane and both axes are preferably perpendicular to one another.

2. A reactor as claimed in claim 1, characterized in that the combustion chamber (2) has the same cross-sectional area as the reactor tube (1) and is accommodated and welded in an opening therein adapted to its circumference.

3. A reactor as claimed in claim 1, characterized in that the combustion chamber (2) is connected to the reactor tube by a flanged-on, tubular intermediate member which in turn is accommodated and welded in an opening (10) in the reactor tube (1).

4. A reactor as claimed in claims 1 to 3, characterized in that a gas lance (24) for fuel gas or a lance-like spray unit for fuel oil is inserted, preferably for longitudinal displacement, through the end wall (19) of a combustion chamber (2) consisting of a cylinder closed at one end and at least one passage (25) for the combustion air directed substantially perpendicularly of the cylinder axis opens into that region covered by the orifice of the fuel supply line in the combustion chamber cylinder.

5. A reactor as claimed in claims 1 to 4, characterized in that the tapering element (13,14) in the reactor tube is cylindrical throughout or tapers conically at its front end and is cylindrical at its rear end or tapers conically at its front end and widens conically at its rear end.

6. A process for the production of furnace black, more particularly using the reactor claimed in the preceding claims, characterized in that hot combustion gases produced in a combustion chamber are fed to an elongate reactor substantially perpendicularly of its axis and are then charged with carbon black raw material sprayed in before, in or just after a constriction in the inner contour of the reactor.

## Revendications

1. Réacteur de production de noir de carbone par décomposition thermique d'hydrocarbures liquides dans des gaz de combustion très chauds, réacteur se composant d'un tube de section circulaire, fermé à son extrémité antérieure par une paroi frontale, ouvert à son extrémité arrière et pouvant être relié à un élément d'échange thermique, à un élément de séparation de noir de carbone et à un élément de collecte de noir de carbone, garni intérieurement en réfractaire, comportant un premier tronçon qui s'étend de la paroi frontale jusqu'à un deuxième élément comme deuxième tronçon rétrécissant de façon symétrique la section du tube, auquel se rattache un troisième tronçon cylindrique ou s'évasant en cône, qui a contre l'élément de rétrécissement un diamètre au moins égal à celui de cet élément et est muni à son extrémité arrière d'au moins un pulvérisateur pour un agent de trempe liquide (refroidissement brusque), réacteur dans lequel le premier tronçon se trouve en liaison dans le tube garni en maçonnerie avec une chambre de combustion comportant un moyen destiné à amener un combustible pour le faire réagir avec un gaz contenant de l'oxygène et dans lequel un dispositif de pulvérisation en forme de lance, déplaçable en translation, est guidé à travers la paroi frontale dans l'axe du tube pour alimenter en matière brute de noir de carbone, caractérisé en ce que la chambre de combustion (2) est reliée par son extrémité ouverte (10) au premier tronçon (3) du tube de réacteur (1), de façon que son axe et celui du tube de réacteur (1) soient situés dans un même plan et que les deux axes soient de préférence perpendiculaires l'un par rapport à l'autre.

2. Réacteur selon la revendication 1, caractérisé en ce que la chambre de combustion (2) a la même surface de section transversale que le tube de réacteur (1) et est adaptée dans un évidement de ce dernier réalisé sur sa périphérie et y est soudée.

3. Réacteur selon la revendication 1, caractérisé en ce que la chambre de combustion (2) est reliée au tube de réacteur par un élément intermédiaire tubulaire, à bride, qui de son côté est adapté dans une ouverture (10) du tube de réacteur (1) et soudé.

4. Réacteur selon les revendications 1 à 3, caractérisé en ce qu'à travers la paroi frontale (19) d'une chambre de combustion (2) composée d'un cylindre fermé d'un côté est introduite une lance (24) pour gaz combustible ou un dispositif de pulvérisation en forme de lance pour huile combustible, de préférence déplaçables longitudinalement et en ce que dans la zone battue par l'orifice de l'amenée de combustible, débouche au moins un canal (25) dirigé perpendiculairement à l'axe du cylindre, pour amener l'air de combustion.

5. Réacteur selon les revendications 1 à 4, caractérisé en ce que l'élément (13, 14) avec rétrécissement est réalisé dans le tube de réacteur avec passage cylindrique à convergence conique dans le tronçon avant et cylindrique dans le tronçon arrière ou bien à convergence conique dans le tronçon avant et divergence conique dans le tronçon arrière.

6. Procédé pour produire du noir de carbone, en particulier par utilisation du réacteur selon les revendications précédentes, caractérisé en ce qu'on amène à un réacteur à extension longitudinale des gaz chauds produits dans une chambre de combustion, dans une direction essentiellement perpendiculaire à l'axe du réacteur et en ce qu'on charge ensuite ces gaz avec de la matière brute pour noir de carbone injectée avant, dedans ou juste après un étranglement dans le contour intérieur du réacteur.

*Fig. 1*

**Fig. 2**

Fig. 3

Fig. 4

Fig. 5